# EUROPEAN PATENT APPLICATION

(11) **EP 2 332 722 A1**
(43) Date of publication of application: **15.06.2011**
(21) Application number: 10252068.1
(22) Date of filing: 07.12.2010
(51) Int. Cl.: B32B 27/10, B32B 3/02, B32B 29/04, E06B 9/11, D21H 27/36, E06B 9/24

(54) **Laminated sheet or panel**

(30) Priority: 10.12.2009 EP 09015321
(71) Applicant: Hunter Douglas Industries B.V., 3071 EL Rotterdam (NL)
(72) Inventor: Hendrikx, Henricus, 5741 GG Beek en Donk (NL)
(74) Representative: Smith, Samuel Leonard

(57) **Abstract**

A laminated paper sheet (1) is provided comprising at least one paper sheet (3A,3B,3C, 103, 203, 303, 403) having a front and a rear face and a circumferential edge. The at least one paper sheet is laminated on the front and the rear with at least one thermoplastic material such that the resulting laminated paper sheet comprises of a front thermoplastic material, at least one intermediate paper sheet and a rear thermoplastic material. The laminated paper sheet further includes tear protection means (17,19) running along at least part of the circumferential edge of the at least one paper sheet and between the front and rear thermoplastic materials.

## Description

The present invention relates to laminated sheets or panels.

Generally such sheets include at least one sheet of paper that is laminated on both sides with a thermoplastic material.

Such sheets with or without a paper layer are known in the art and are fashionable in the field of window covering. Particularly in fashion are sheets with paper that are used as so-called paper window coverings using Japanese paper, also known as washi or wagami paper. Laminated washi paper is used in for example roller blinds, panel blinds and vertical slatted blinds or the like.

Washi paper is commonly made using fibers from the bark of the gampi tree, the mitsuata shrub or the paper mulberry, but can also be made using bamboo, hemp, rice and wheat. The laminated paper is relatively strong and has a translucency that is attractive for window covering. Its use in the typical Japanese sliding doors "Shoji" is also well known.

For less translucent window coverings a different type paper can be used. Paper window coverings are known in the art, paper pleated blinds have been known the art.

The currently known laminated sheet window coverings are generally made from a pair of PVC or PET foils or sheets or of another type of thermoplastic material. Typically a heat-activatable adhesive or pressure-sensitive adhesive will be on one side of the thermoplastic foils or sheets.

Popular laminated sheet window coverings include a paper sheet between the laminates. E.g. they will be made from paper that is laminated with PVC or PET or other thermoplastic materials on both sides of the paper sheet. Between the paper and the laminate material a heat-activatable adhesive or pressure-sensitive adhesive will generally be provided.

One problem associated with the current laminated sheet window coverings, and in particular with the laminated paper window coverings, is that the laminated sheets tear too easily when the blind is in use. For example when the sheets are used in a panel blind, the sheets are usually equipped with a top and bottom bar to define the panels, and the panels are usually slidably mounted on a track and can be slid into a position covering the window or in a stacked position at a side of the window opening. During the sliding or stacking movement the panels sometimes bump into each other and become damaged. The damage is generally to the side edges of the panels and in the form of a tear. Once a small nick or tear is present, the panel is prone to tear further. Other causes of damage are pets running into the paper panels or swaying of the panels due to draft or wind. These problems also occur with paper roller blinds and pleated blinds. Temperature, humidity and UV-A cause aging of the laminated sheets making them even more prone to being damaged.

A proposed solution has been to use thicker thermoplastic layers or a stronger type of thermoplastic. Thicker layers have as drawback that the paper laminate loses its paper look, touch and feel and/or becomes too stiff for use in a roller blind. They also may become less translucent.

The object of the invention is to present a solution by which the laminated sheets are protected against tearing, or at least the tear resistance of the laminated sheets is greatly enhanced. It is also an object of the invention to provide window coverings comprising laminated sheets that are protected against tearing, or at least laminated sheets with a greatly enhanced tear resistance. In a more general sense, it is thus an object of the invention to overcome or ameliorate at least one of the disadvantages associated with laminated sheets.

To this end and according to a first aspect of the invention a laminated paper sheet is provided comprising at least one paper sheet having a front and a rear face and a circumferential edge and the at least one paper sheet being laminated on the front and the rear with at least one thermoplastic material such that the resulting laminated paper sheet comprises of a front thermoplastic material, at least one intermediate paper sheet and a rear thermoplastic material, the laminated paper sheet further including tear protection means running along at least part of the circumferential edge of the at least one paper sheet and between the front and rear thermoplastic materials.

By providing the tear protection along at least part of the circumferential edge of the paper sheet, the paper will be protected against tearing without having to provide stronger paper or thicker or stronger thermoplastics. With conventional materials a strong resistance to tearing of the edges is realized.

Advantageously, the tear protection means runs parallel to, and slightly spaced apart from, the circumferential edge of the at least one paper sheet. In this regard, it is especially advantaeous that the tear protection means runs atop the front or rear face of the at least one paper sheet.

Also advantageously, the tear protection means consists of at least one thread. In this regard, it is especially advantaeous that the thread is one of the following construction types: core thread, monocore thread, monofilament thread, spun thread, textured thread, twisted multifilament thread, or air entangled thread. It is particularly advantaeous that the thread is a monofilament thread, quite particularly a clear polyester or nylon..

Further advantageously, the thread is made of a thermoplastic material having a higher glass transition temperature than the thermoplastic materials used for laminating the sheet.

According to a further aspect of the invention, the laminating thermoplastic materials are clear thermoplastics. Advantageously, these thermoplastic materials have a glass transition temperature Tg in the range of 80-150 °C, especially in the range of 90-140 °C.

Also advantageously, the at least one paper sheet is rectangular in shape and the circumferential edge consists of a pair of opposite left and right edges and a pair of opposite top and bottom edges, and the tear protection means runs along the left and right edges only.

According to a still further aspect of the invention aspect of the invention, a laminated sheet is provided comprising a front thermoplastic material and a rear thermoplastic material, the laminated sheet further including tear protection means running along at least part of the circumferential edge of the laminated sheet and between the front and rear thermoplastic materials.

Further aspects of the invention will be apparent from the detailed description below and with reference to the accompanying drawings, in which:
Figure 1 is a cross-section of a first embodiment of the laminated sheet of the invention including a paper sheet and having the tear protection means running along to the side edges of the paper but not on the paper;
Figure 2 is a front view of the first embodiment of the laminated sheet of the invention having a plurality of paper segments;
Figure 3 is a cross-section of a second embodiment of the laminated sheet of the invention including a paper sheet and having the tear protection means running along the side edges of the paper and on the paper;
Figure 4 is a cross-section of a third embodiment of the laminated sheet of the invention including a paper sheet and having the tear protection means running along the side edges of the paper one on the front face of the paper and one on the rear face of the paper;
Figure 5 is a cross-section of a fifth embodiment of the laminated sheet of the invention including a paper sheet and having the tear protection means running along the side edges of the paper and on the paper both on the front and on the rear side of the paper;
Figure 6 is a cross-section of a sixth embodiment of the laminated sheet of the invention including a paper sheet having the tear protection means running along to the side edges of the paper but not on the paper and additional tear protection means running along the side edges of the paper and on the paper both on the front and on the rear side of the paper,. and
Figure 7 is a cross section of a seventh embodiment of the laminated sheet of the invention where no paper layer is present and the tear protection means running along to the side edges of the laminated sheet.

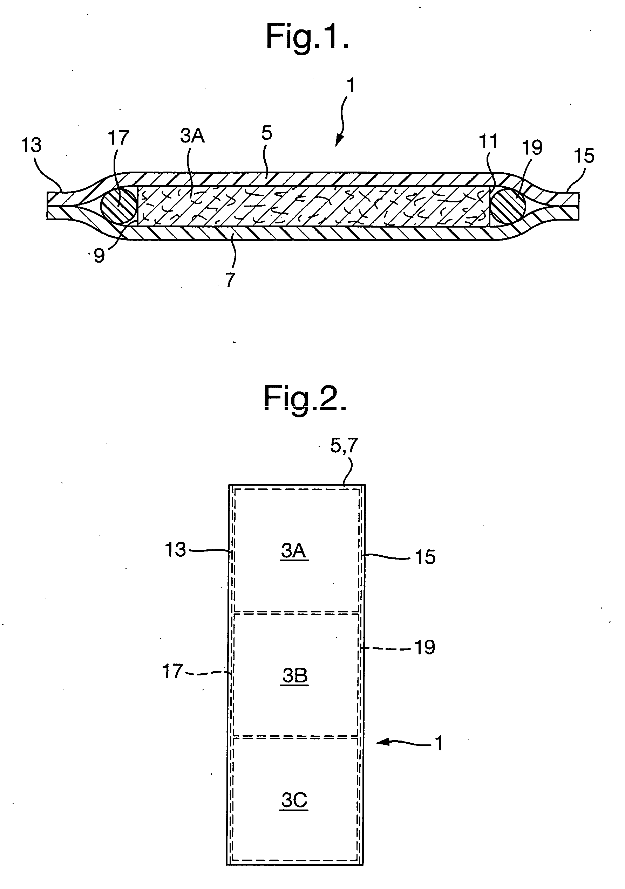

Figure 1 shows a cross-section of a laminated paper sheet 1 with a paper sheet segment 3 and front and rear with thermoplastic material layers 5, 7. The thermoplastic layers 5, 7 extend over the left and right side edges 9, 11 of the sheet and are bonded, e.g., with a heat-activatable adhesive or a pressure-sensitive adhesive, into left and right laminate rims 13, 15. The edges of the paper sheet are thus completely covered by the thermoplastic material. Along the left and right side edges of the paper runs a thread 17, 19 as left and right tear protection means. The threads 17, 19 are held in place by the thermoplastic materials. In this embodiment the threads run parallel to the edges of the paper and are not atop the paper. The threads run along the complete length of the paper sheet.

When traditional Japanese paper (3) is used, the size of the paper sheet is often not big enough to form a window covering of a single sheet. In that case multiple paper sheet segments can be used to make into single laminated sheet. This is shown in figure 2 where paper sheet segments 3A, 3B and 3C are aligned one after the other and as a whole are covered by front and rear thermoplastic layers 5, 7. The resulting laminated paper sheet preferably has continuous tear protection threads 17, 19 along the complete side edge of the sheet assembly.

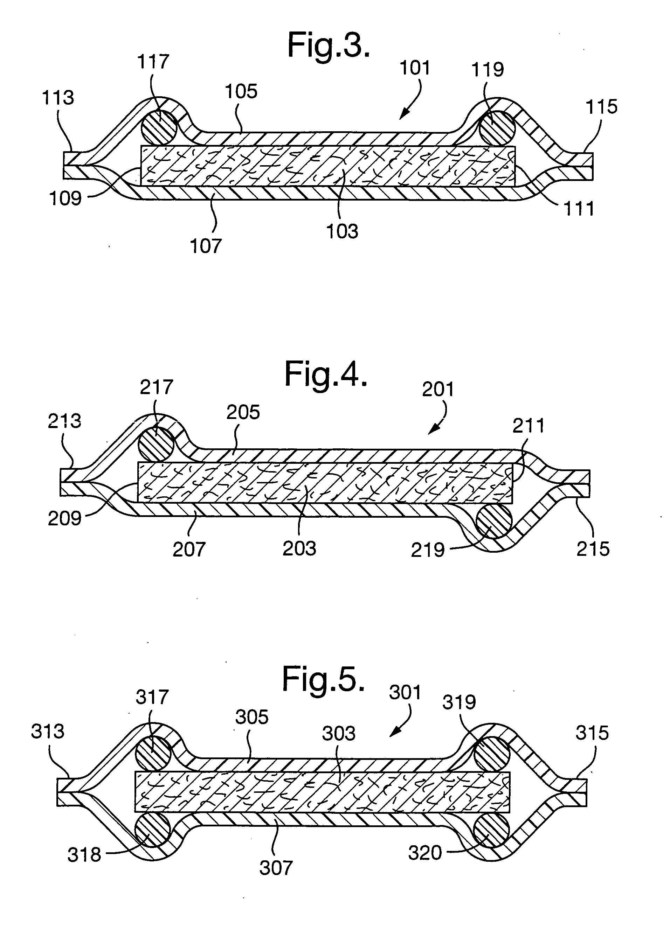

Instead of placing the threads along the side edges of the paper sheet or segments, it is possible to place the threads on the paper. Embodiments illustrating these options are shown in figures 3-6 and for these embodiments the corresponding referral numbers greater by 100, 200, and 300 and 400 are for used the same parts or corresponding parts.

Figure 3 shows a cross-section of the second embodiment of the laminated paper sheet 101 with a paper sheet segment 103, paper side edges 109, 111, front and rear with thermoplastic material layers 105, 107 and bonded laminated rims 113, 115. The tear protection threads 117, 119 run the left and right side edges of the paper and atop the front face of the paper.

Figure 4 shows a cross section of the third embodiment of the laminated paper sheet 201 with a paper sheet segment 203, paper side edges 209, 211, front and rear with thermoplastic material layers 205, 207 and bonded laminated rims 213, 215. The tear protection threads 217, 219 run the left and right side edges of the paper and one atop the front face of the paper and one in contact with the rear face of the paper.

Figure 5 shows a cross section of the fourth embodiment of the laminated paper sheet 301 with a paper sheet segment 303, paper side edges 309, 311, front and rear with thermoplastic material layers 305, 307 and bonded laminated rims 313, 315. In this embodiment four tear protection threads 317, 318, 319, 320 are used which run along the left and right side edges of the paper and one atop the front face of the paper and along left and right side edges in contact with the rear face of the paper.

Figure 5 shows a cross section of the fourth embodiment of the laminated paper sheet 301 with a paper sheet segment 303, paper side edges 309, 311, front and rear with thermoplastic material layers 305, 307 and bonded laminated rims 313, 315. In this embodiment four tear protection threads 317, 318, 319, 320 are used which run along the left and right side edges of the paper and one atop the front face of the paper and along left and right side edges in contact with the rear face of the paper.

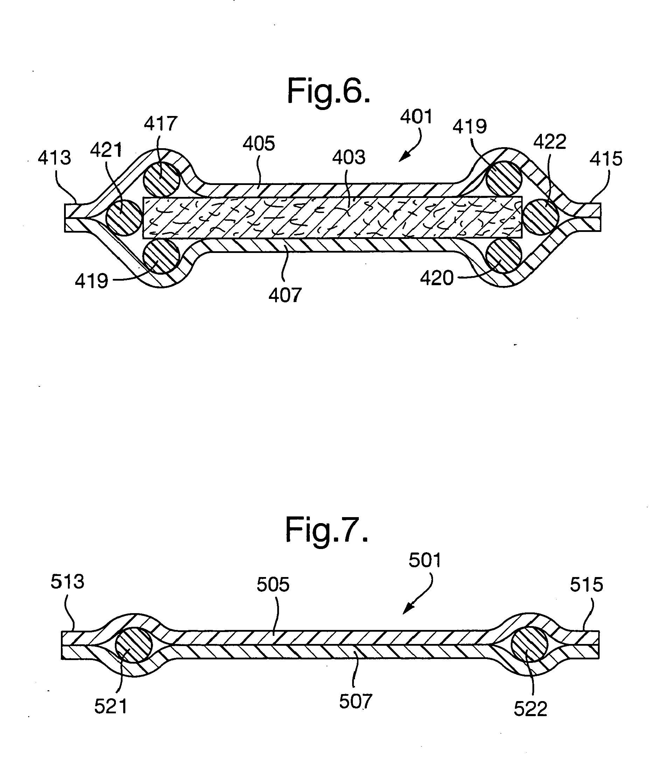

Figure 6 shows a cross-section of the fifth embodiment of the laminated paper sheet 401, being a combination of the first and the fourth embodiment. This embodiment thus shows the use of six tear protection threads 417,418, 419, 420, 421 and 422. The first four threads 417,418, 419 and 420 run along the left and right side edges of the paper and one atop the front face of the paper and along left and right side edges in contact with the rear face of the paper. The last two threads 421 and 422 run parallel to the left and right side edges of the paper and are not atop the paper. All threads preferably run along the complete length of the laminated sheet.

By using the tear protection threads on the sides of the paper they confer protection against tearing. The position along the edge is preferred, but for ease of production the threads can be positioned on the paper along the edge too.

The shape of the paper sheets or sheet segments is preferably generally rectangular. However other shapes are also possible. The tear protection with threads will work as long as the threads run along the edges of the paper.

The paper that is used preferably is Japanese washi paper and the paper can be plane or printed. The thickness of the paper is chosen from a range of 7 g/m² to 300 g/m² , and preferably between 15-50 g/m².

For laminating any thermoplastic material is possible, but preferably a thermoplastic material is used having a glass transition temperature Tg in the range of 80-150 °C and preferably in the range of 90-140 °C.

Preferred thermoplastics PET or PVC each used in combination with one thermoplastic chosen from the group of EVA, Polyolefin or Copolyamide. A preferred combination will have approximately 1/3 PET and 2/3 EVA.

For ease of manufacturing it is possible to use foils or films of the thermoplastic that can be laminated from rolls. The thickness of the laminating foils is chosen from a range of 20 microns and 250 microns and preferably between 30 and 125 microns for a single side of the laminate The thickness of the finished laminated sheet is between 64 microns - 400 microns.

After laminating the laminated sheet can be embossed with patterns. Or portions of the laminate can be lasered to a relief or holographic patterns. The laminate can be printed.

The tear protection means is preferably in the form of a thread that of any of the following construction types, core thread, monocore thread, monofilament thread, spun thread, textured thread, twisted multifilament thread, or air entangled threads. However preferably the tear protection thread is a clear monofilament thread of plastic or of thermoplastic with a glass transition point higher than the Tg of the thermoplastic that is used for laminating the paper. Thickness of the thread is preferably 1,5 dernier.

The tear protection can also be used in a laminate sheet where the paper sheet is omitted. This embodiment is shown in figure 7 for this embodiment the corresponding referral numbers greater by 500 are for used the same parts or corresponding parts of the first embodiment.

Figure 7 shows a cross section of the laminated sheet 501 with front and rear with thermoplastic material layers 505, 507. The thermoplastic layers 505, 507 are bonded completely together and include left and right laminate rims 513, 515. Adjacent and parallel to the left and right rims 513, 515 of the laminate runs a thread 517, 519 as left and right tear protection means. The threads 517, 519 are held in place by the thermoplastic materials. Elegant translucent sheets can thus be made. Patterns can be made to the sheets by printing, lasering a relief, embosssing or the like.

## Claims

1. A laminated paper sheet (1) is provided comprising at least one paper sheet (3A,3B,3C, 103, 203, 303, 403) having a front and a rear face and a circumferential edge and the at least one paper sheet being laminated on the front and the rear with at least one thermoplastic material such that the resulting laminated paper sheet comprises of a front thermoplastic material, at least one intermediate paper sheet and a rear thermoplastic material, the laminated paper sheet further including tear protection means (17,19) running along at least part of the circumferential edge of the at least one paper sheet and between the front and rear thermoplastic materials.

2. The laminated paper sheet of claim 1 wherein the tear protection means comprises a thread.

3. The laminated paper sheet of claim 1 or 2 wherein the tear protection means runs parallel to and slightly spaced apart from the circumferential edge of the at least one paper sheet.

4. The laminated paper sheet of claim 1 or 2 wherein the tear protection means runs atop the front or rear face of the at least one paper sheet.

5. The laminated paper sheet of any one of claims 1-4 wherein further tear protection means are provided such that at least one tear protection means is provided parallel to an spaced apart from the circumferential edge of the at least one paper sheet and at least one further tear protection means is provided which runs atop the front or rear face of the at least one paper sheet.

6. The laminated sheet of any one of the claims 1-5 wherein consists of at least one thread.

7. The laminated sheet of claim 6 wherein at least one the thread is of a construction chosen from the group of any of the following construction types core thread, monocore thread, monofilament thread, spun thread, textured thread, twisted multifilament thread, or air entangled thread.

8. The laminated sheet of claim 7 wherein the at least one thread is a monofilament thread.

9. The laminated sheet of any one of the claims 6-8 wherein the at least one thread is of a thermoplastic material higher glass transition temperature than any of the thermoplastic materials used for laminating the sheet.

10. The laminated sheet of any one of the claims 1-9 wherein the laminating thermoplastic materials are preferably clear thermoplastics.

11. The laminated sheet of any one of the claims 1-10 wherein the laminating thermoplastic materials have a glass transition temperature T_{g} in the range of 80-150 °C and preferably in the range of 90-140 °C.

12. The laminated sheet of any one of claims 6-9 wherein the tear protection thread of of a clear polyester or nylon.

13. The laminated sheet of claim of any one of the preceding claims 1-12 wherein the at least one paper sheet is rectangular in shape and the circumferential edge consists of a pair of opposite left and right edges and a pair of opposite top and bottom edges, and the tear protection means runs along the left and right edges only.

14. A laminated sheet comprising a front thermoplastic material and a rear thermoplastic material, the laminated sheet further including tear protection means running along at least part of the circumferential edge of the laminated sheet and between the front and rear thermoplastic materials.

15. The laminated sheet of claim 14 further including a paper sheet such that the resulting laminated sheet comprises of a front thermoplastic material, at least one intermediate paper sheet and a rear thermoplastic material, the laminated paper sheet further including tear protection means (17,19) running along at least part of the circumferential edge of the at least one paper sheet and between the front and rear thermoplastic materials.
